# EUROPÄISCHE PATENTSCHRIFT

(11) **EP 1 923 242 B1**
(45) Veröffentlichungstag und Bekanntmachung des Hinweises auf die Patenterteilung: **09.09.2009**
(21) Anmeldenummer: 07022061.1
(22) Anmeldetag: 14.11.2007
(51) Int. Cl.: B60H 1/34

(54) **Luftausströmer mit Drallströmung und konventioneller Strömung**
Air ducts with vortex flow and conventional flow
Dispositif d'écoulement d'air avec écoulement giratoire et écoulement conventionnel

(30) Priorität: 14.11.2006 DE 102006053836
(43) Veröffentlichungstag der Anmeldung: 21.05.2008
(73) Patentinhaber: Behr GmbH & Co. KG, 70469 Stuttgart (DE)
(72) Erfinder: Benamira, Salah, 70180 Stuttgart (DE)

(56) Entgegenhaltungen:
- DE-A1- 10 223 660
- DE-B- 1 219 818
- DE-U1- 29 914 962
- DE-U1-202005 002 000
- DE-U1-202006 006 597

## Beschreibung

Die Erfindung betrifft einen Luftausströmer, insbesondere für eine Klimatisierung eines Fahrzeuginnenraums.

Im Stand der Technik sind Luftausströmer in diversen Varianten bekannt. Sie dienen dazu, im Fahrzeuginnenraum schnell ein angenehmes Klima zu schaffen. Es ist ihre Aufgabe, zu diesem Zweck genügend Luft in den Innenraum zu befördern.

So beschreibt die DE 100 36 776 A1 eine Einrichtung zur Klimatisierung eines Innenraumes, insbesondere eine Fahrzeug-Klimatisierungseinrichtung, mit einem Klimagerät mit einer Klimaluft-Führung, sowie mit einem Luftheizgerät mit einer Heizluft-Führung. Die Klimaluft-Führung und die Heizluft-Führung sind mit dem Innenraum verbunden und über ein Mündungsstück in Form einer Doppeldüse zusammengeführt, welche ein Innenrohr und ein konzentrisches Außenrohr aufweist. Dabei kann im Ringraum zwischen dem Innenrohr und Außenrohr eine Drallströmungs-Leiteinrichtung vorgesehen sein, die vorzugsweise einstellbar ist. Bei dieser Einrichtung handelt es sich um einen zweikanaligen Luftausströmer mit einem inneren Luftführungskanal für einen konzentrierten Luftstrahl (auch Spotbereich genannt) und einem äußeren Luftführungskanal für eine Drallströmung (auch Diffusbereich genannt). In vollständig geöffneter Stellung hat der Diffusbereich einen hohen Druckabfall und eine starke Geräuschentwicklung. Die Effizienz des Spotbereichs wird dadurch reduziert.

Die DE 299 14 962 U1 beschreibt einen einkanaligen Luftausströmer, insbesondere für eine Kraftfährzeuglüftung, mit einem Drallgeber, der mehrere Leitschaufeln hat, die jeweils um eine Schwenkachse verschwenkbar sind. Die Schwenkachsen sind etwa radial um eine gemeinsame Zentralachse angeordnet, wobei eine Drehbewegung der Zentralachse als Schwenkbewegung auf die Schwenkachsen der Leitschaufeln übertragbar ist. Die den Leitschaufeln zugeordneten Schwenkachsen sind jeweils mit einem Reib- oder Zahnrad drehfest verbunden, weiche mit einem zentralen Reib- oder Zahnrad der Zentralachse in Antriebsverbindung stehen. Die Zentralachse trägt an ihrem abströmseitigen Achsende eine manuell betätigbare Drehhandhabe. Bei diesem Luftausströmer kann aufgrund der geringen Tiefe und geringen Ablenkungswirkung des Drallgebers nur eine Strömung mit schwachem Drall erzeugt werden.

Aus der EP 0 936 091 B1 ist ein Luftausströmer bekannt, bei welchem eine Leitrampe in Spiral- oder Helixform vorgeschlagen wird. Diese bewirkt eine Strömung mit starkem Drall und damit eine größere Verteilung des in ihr geführten Luftstroms in Art eines Diffusbereiches. Durch die konstante Drallströmung im Diffusbereich dieses Luftausströmers ist jedoch eine Anpassung der Klimatisierungswirkung an jeweilige Umgebungsbedingungen nicht möglich.

Aus der DE 10 2005 036 159 A1 ist eine weitere Luftstromsteuereinheit bekant, welche mehrere bewegliche Luftleitelemente zur Erzeugung einer konzentrischen Luftströmung und wenigstens einer drallartigen Strahlaufspreizung aufweist, wobei die wenigstens eine drallartige Luftströmung stufenlos eingestellt werden kann.

Ferner ist aus der DE 12 19 818 ein Kugelgelenk-Belüfter für Fahrzeuge bekannt, welcher einen in einem hohlen Kugelkörper angeordneten zum Sperren oder Freigeben des Luftstromes dienenden hohlzylindrischen Steuerschieber aufweist.

Der Erfindung liegt die Aufgabe zugrunde, einen Luftausströmer der eingangs genannten Art anzugeben, welcher bei einfachem Aufbau eine Anpassung einer Klimatisierungswirkung erlaubt, wobei ein breiter Variationsbereich der Anpassung möglich sein soll.

Die Aufgabe wird erfindungsgemäß gelöst durch einen Luftausströmer, welcher die in Anspruch 1 angegebenen Merkmale aufweist.

Vorteilhafte Ausgestaltungen des Verfahrens sind Gegenstand der Unteransprüche.

Die Erfindung schlägt einen Luftausströmer mit mindestens einem Luftführungskanal und mindestens einem in diesem angeordneten Luftleitelement vor, das mittels eines einzelnen Bedienelements in mehreren Rotationsfreiheitsgraden zur Einstellung von verschiedenen Strömungsrichtungen und in einem translatorischen Freiheitsgrad zur Einstellung von verschiedenen Strömungsarten einstellbar ist. Durch eine derartige translatorische Verstellung des Luftleitelements ist eine mehrfunktionale, insbesondere bi-funktionale Düse mit dem Modus Drall- oder Diffusströmung und konventioneller oder gleich gerichteter Strömung oder Spotströmung ermöglicht. Darüber hinaus kann die jeweils erzeugte Strömung umgelenkt oder in vorgegebener Richtung ausgestrahlt werden. Vorzugsweise ist das Bedienelement zentrisch im Luftführungskanal angeordnet ist und bildet die Längsachse des Luftführungskanals.

Durch translatorisches, d.h. geradliniges, Verstellen des Bedienelements entlang der Längsachse des Luftführungskanals ist mittels des entsprechend verstellten Luftleitelements eine Drallströmung oder Turbulenzströmung einstellbar. Alternativ kann durch translatorisches Verstellen des Bedienelements eine gleichförmig gerichtete, strahlförmige Strömung eingestellt werden. Darüber hinaus kann auch eine Spotströmung eingestellt werden. Hierzu wird das Bedienelement beispielsweise axial in den Luftführungskanal hinein oder heraus zwischen zwei Endstellungen oder in eine beliebige Zwischenposition bewegt bzw. gestellt. Mit anderen Worten: Zur Einstellung der gewünschten Position des Luftleitelements wird das Bedienelement herausgezogen oder hineingedrückt.

In der erfindungsgemäßen Ausführungsform ist das Luftleitelement als ein Schaufelkranz mit einer Anzahl von Schaufel ausgebildet. Mittels des Schaufelkranzes wird die Luftströmung in Querrichtung zur Kanallängsachse umgelenkt und somit verdrallt. Solange die verdrallte Luftströmung den Luftführungskanal durchfließt, wirken die Kanalwände entgegen der Zentrifugalkraft der verdrallten Luftströmung. Am Luftströmerausgang platzt die Luftströmung in radialer Richtung auf und strömt diffus in den Fahrzeuginnenraum. Vorzugsweise ist der Schaufelkranz kurz vor dem Strömungsaustritt angeordnet. Bedingt durch den Schaufelkranz wird die Luftströmung nur über einen kurzen Weg verdrallt, wodurch die Luftströmung vorher keine großen Umlenkungen erfährt und dadurch weniger Druckverlust aufweist. Durch die Nutzung eines größeren Querschnitts und die Verdrallung der Luftströmung auf kürzerem Wege ergeben sich zudem geringere benetzte Flächen und geringere Strömungsgeschwindigkeiten. Daraus resultieren wiederum geringere Druckverluste und ein besseres akustisches Verhalten.

In einer bevorzugten Ausführungsform ist ein Schaufelkranz vorgesehen, der eine Anzahl von flexiblen und parallel zueinander verlaufenden Schaufeln (auch Einzelstränge genannt) aufweist, die wendel- oder spiralförmig verdreht oder gewunden werden können. Derartige wendel- oder spiralförmige Schaufeln dienen der Verdrallung des Luftstroms und somit einem diffusen Luftaustritt. Diese Ausführung wird auch Mehrfach-Helix genannt Zum Erzeugen einer einstellbaren Drallströmung wird dabei das Luftleitelement, insbesondere deren Schaufeln entsprechend verstellt, so dass mindestens eine Helix gebildet ist. Im Sinne der Erfindung kommt als Helix für den Schaufelkranz jede sich rotierend in die Tiefe des Raums fortsetzende Struktur in Betracht. Eine solche Struktur kann insbesondere auch spiralförmig oder als schraubenförmige Wendel ausgebildet sein.

In einer Ausführungsform können die Schaufeln eines einzelnen Schaufelkranzes zentriert um den Umfang einer inneren Ausnehmung des Luftleitelements verteilt angeordnet sein. Alternativ können die Schaufeln zentriert um den Umfang des zentrisch angeordneten Bedienelements verteilt angeordnet sein. In diesem Ausführungsbeispiel sind die Schaufeln orthogonal und drehbar radial um das Bedienelement angeordnet und am radialen Ende jeweils mit einem Zahnrad versehen, das in eine im Gehäuse des Luftleitelements angeordnete Zahnradführung, z.B. Zahnstange, geführt ist. Hierdurch können die einzelnen Schaufeln in radialer Richtung entlang ihrer Längsachse durch eine lineare Bewegung des Bedienelements verdreht oder gewunden werden. Mit anderen Worten: Die translatorische Bewegung des Bedienelements ist in eine Drehbewegung der Längsachse der Schaufeln übertragbar. Dabei sind die Schaufeln mittels des Bedienelements synchron verstellbar.

Zur Ausrichtung der Strömung am Austritt ist das Luftleitelement mittels des Bedienelements in mehreren Rotationsfreiheitsgraden verstellbar. Hierzu ist das Luftleitelement im Wesentlichen kugelförmig ausgebildet. Der Luftführungskanal bildet eine Kugelpfanne, in welche das Luftleitelement in Art eines Kugelgelenks drehbar gelagert ist. Mittels des zentrisch angeordneten Bedienelements ist das mit diesem verbundene Luftleitelement in mehreren Rotationsfreiheitsgraden verstellbar, indem das Bedienelement radial bewegbar ist und das Luftleitelement entsprechend im Luftführungskanal relativ zur Längsachse des Luftführungskanals drehbar ist. Hierdurch ist eine beliebige Strömungsrichtung einstellbar.

In einer weiteren Ausführungsform können mehrere Luftleitelemente hintereinander entlang der Längsachse des Luftführungskanals angeordnet sein. Je nach Form, Funktion und Aufbau können mehrere Schaufelkränze hintereinander angeordnet sein. Auch kann ein Schaufelkranz aus mehreren Luftleitelementen, z. B. einzelnen Schaufeln, bestehen, die entlang der Längsachse hintereinander angeordnet und separat oder gemeinsam verstellbar sind und mittels Verstellen mindestens eine Helix zum Erzeugen einer Drallströmung bilden. Ein derartiger Schaufelkranz ist beispielsweise aus der DE 10 2005 061 722.0 bekannt. Auch können Klappen oder Lamellen vor und/oder hinter dem oder den Schaufelkränzen im Luftführungskanal angeordnet sein. Je nach Ausführungsform können die Luftleitelemente über das Bedienelement verstellbar sein. Zusätzlich können weitere separate Verstellelemente für die weiteren Luftleitelemente vorgesehen sein.

In einer möglichen Ausführungsform ist der Luftführungskanal als Ringrohr ausgebildet und als äußerer Luftführungskanal um das Bedienelement herum angeordnet. Auf diese Weise kann auch ein einkanaliger, ringförmiger Luftausströmer mit einem Schaufelkranz mit einstellbarer Helix-Form realisierbar sein.

In einer weiteren Ausführungsform umgibt der Luftführungskanal mindestens einen weiteren inneren Luftführungskanal und verläuft parallel zu diesem. Mit anderen Worten: Ein äußerer, ringförmiger Luftführungskanal umgibt einen inneren, zylinderförmigen Luftführungskanal. Dies ermöglicht gleichzeitig verschiedene Belüftungsarten, z. B. eine spotförmige Belüftung und eine diffuse Belüftung. Durch den verringerten Druckabfall bei einer diffusen Belüftung bei Nichtverwendung der Helix kann eine höhere Effizienz der Belüftung erreicht werden.

Darüber hinaus weist eine weitere vorteilhafte Ausführungsform eine Klappe im inneren Luftführungskanal auf, welche mit dem Bedienelement verbunden ist, das der Verstellung der Luftleitelemente im äußeren Luftführungskanal dient. Auf diese Weise sind die Luftleitelemente, welche die Drallströmung für die diffuse Strömung im äußeren Luftführungskanal steuern, simultan mit der Klappe zur Einstellung der spotförmigen Strömung verstellbar. Da die mindestens eine verstellbare Helix insbesondere einen verringerten Druckverlust im äußeren Luftführungskanal bewirkt, ist so mit einer einzigen Bedienungshandlung eine effiziente Belüftung einstellbar.

In besonderen Ausgestaltungen sind die Luftführungskanäle zylindrisch und koaxial ausgebildet. Dies ermöglicht eine einfache Herstellung und einen symmetrischen Strömungsverlauf.

Ausführungsbeispiele der Erfindung werden anhand von Zeichnungen näher erläutert. Darin zeigen:
- Fig. 1: eine perspektivische Darstellung eines Luftausströmers mit einem als Schaufelkranz ausgebildeten Luftleitelement, in welchem zentrisch ein Bedienelement angeordnet ist,
- Fig. 2: den Luftausströmer gemäß Figur 1 im Längsschnitt mit einem Luftleitelement in einer offenen Stellung mit gleichförmig gerichteter Strömung,
- Fig. 3: den Luftausströmer gemäß Figur 1 im Längsschnitt mit einem Luftleitelement in einer offenen Stellung mit diffuser Strömung,
- Fig. 4: bis 6 eine mögliche Ausführungsform für einen Luftausströmer mit einem als Schaufelkranz ausgebildeten Luftleitelement und einem weiteren in Strömungsrichtung gesehen nachgeschalteten Luftleftelement, die beide mittels des zentrischen Bedienelements verstellbar sind,
- Fig. 7: eine mögliche Ausführungsform für einen Luftausströmer mit einem als Schaufelkranz ausgebildeten Luftleitelement und weiteren in Strömungsrichtung gesehen vorgeschalteten Luftleitelementen, die beide mittels des zentrischen Bedienelements verstellbar sind,
- Fig. 8: eine mögliche Ausführungsform für einen Luftausströmer mit einem als Schaufelkranz ausgebildeten Luftleitelement und zwei weiteren in Strömungsrichtung gesehen vorgeschalteten Luftleitelementen, und
- Fig. 9: eine mögliche Ausführungsform für einen Luftausströmer mit einem aus zwei nebeneinander angeordneten Schaufelkränzen gebildeten Luftleitelement und zwei in Strömungsrichtung gesehen vorgeschalteten Luftleitelementen, die sich in Querrichtung über beide Schaufelkränze erstrecken.

Einander entsprechende Teile sind in allen Figuren mit den gleichen Bezugszeichen versehen.

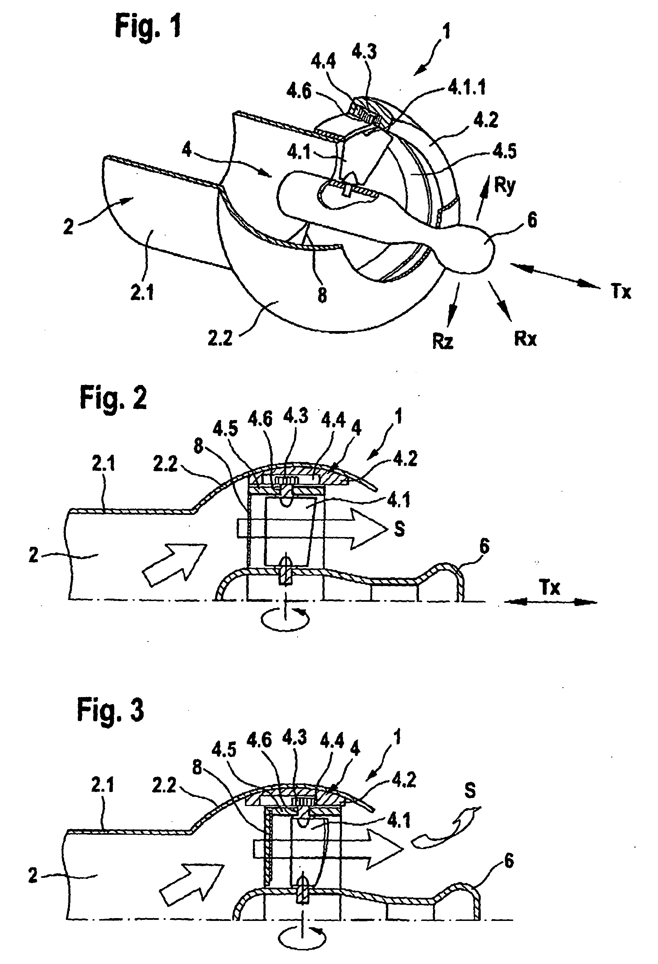

Der in Figur 1 dargestellte Luftausströmer 1 weist einen Luftführungskanal 2 für eine diffuse Belüftung und für eine spotförmige, gleichgerichtete Belüftung auf. In einer möglichen Ausführungsform ist der Luftführungskanal 2 strömungseingangsseitig durch einen geraden Abschnitt 2.1 und strömungsausgangsseltig durch einen kugelförmigen Abschnitt 2.2 gebildet. In dem strömungsausgangsseitigen, kugelförmigen Abschnitt 2.2 ist der Luftausströmer 1 angeordnet und integriert. Für eine mehrfunktionale Belüftung weist der Luftausströmer 1 ein Luftleitelement 4 auf, das in einer möglichen Ausführungsform aus einer Anzahl von Schaufeln 4.1 gebildet ist, die radial um die Längsachse des Luftführungskanals 2 verteilt angeordnet sind. Mit anderen Worten: Das Luftleitelement 4 ist ein Schaufelkranz, der von einem Gehäuse 4.2 umgeben.

Das Luftleitelement 4 ist mittels eines zentrisch angeordneten Bedienelements 6 in mehreren Rotationsfreiheitsgraden Rx bis Rz zur Einstellung verschiedener Strömungsrichtungen und in einem translatorischen Freiheitsgrad Tx zur Einstellung einer Strömungsart verstellbar.

Zur Einstellung der Strömungsrichtung ist das Luftleitelement 4, d.h. der Schaufelkranz, in seiner Außenform weitgehend kugelförmig ausgeführt und als Kugel in dem zumindest bereichsweise korrespondierenden kugelförmigen Abschnitt 2.2 des Luftführungskanals 2, der eine Kugelpfanne bildet, drehbar gelagert. Das Bedienelement 6, z. B. ein Stick, ist über ein Verbindungselement 8, z. B. eine dünne Strebe, mit dem Luftleitelement 4 verbunden. Durch Bedienen des Bedienelements 6, beispielsweise radial in Richtung einer der Rotationsfreiheitsgraden Rx bis Rz, wird das Luftleitelement 4 entsprechend im Kugelgelenk gedreht und die aus dem Luftausströmer 1 austretende Luft in eine entsprechende Richtung geleitet.

Zur Einstellung der Strömungsart ist die jeweilige Schaufel 4.1 drehbar im Bedienelement 6 gelagert. Das radiale Schaufelende 4.1.1 ist mit einem Zahnrad 4.3 versehen, das in eine Zahnradführung 4.4, z. B. Zahnstange, im Gehäuse 4.2 des Luftleitelements 4 eingreift. Zwischen den Zahnrädern 4.3 der Schaufeln 4.1 und den radialen Schaufelenden 4.1.1 kann zusätzlich ein radial umlaufender Haltering 4.5 angeordnet sein. Dabei ist im Haltering 4.5 eine Aufnahme 4.6 für die Welle des Zahnrads 4.3 eingebracht. Durch ein Herausziehen bzw. Hineindrücken des Bedienelements 6 werden die Schaufeln 4.1 um ihre Längsachse gedreht bzw. gewunden. Die Verdrehung der Schaufeln 4.1 um ihre Längsachse bewirkt strömungsausgangsseitig eine Drallströmung oder Turbulenzströmung. Auch können die Schaufeln 4.1 mittels des Bedienelements 6 derart gewunden werden, dass ein oder mehrere Helices gebildet und geformt werden. Die Verwindung der Schaufeln 4.1 kann dabei durch den Grad der Verdrehung des Bedienelements 6 in einem großen Bereich eingestellt werden. Durch entgegengesetztes Drehen kann der Ausgangszustand der Schaufeln 4.1, d.h. eine gerade und ebene Schaufelfläche, wiederhergestellt werden. In diesem Zustand ist der Schaufelkranz offen für eine gleichgerichtete Strömung und somit eine konventionelle Strömung. In einer weiteren Position können die Schaufeln 4.1 derart gestellt werden, dass der Luftführungskanal 2 vollständig geschlossen ist. Darüber hinaus ist jede beliebige Zwischenstellung und somit eine beliebige Strömung zwischen Spotströmung und Drallströmung einstellbar.

Figuren 2 und 3 zeigen den Luftausströmer gemäß Figur 1 im Längsschnitt. In Figur 2 ist das Verbindungselement 8 zwischen Haltering 4.5 und Bedienelement 6 zur Übertragung der radialen Bewegung des Bedienelements 6 auf das Luftleitelement 4 dargestellt. Durch diese Verbindung ist bei einer radialen Bewegung des Bedienelements 6 das Luftleitelement 4 in der Kugelpfanne entsprechend drehbar. In Figur 2 sind die Schaufeln 4.1 des Schaufelkranzes in ihrer Ausgangsstellung gezeigt und nicht verdreht oder gewunden. Somit strömt die Luft in Strömungsrichtung S gleichgerichtet und gleichförmig, insbesondere strahl- oder spotförmig aus. Durch Ziehen oder Drücken des Bedienelements 6 in translatorischer Richtung Tx werden die in der Zahnradführung 4.4 über das zugehörige Zahnrad 4.3 geführten Schaufeln 4.1 gewunden und verdreht, so dass die in Strömungsrichtung S geführte Luft mit einem Drall versehen wird und strömungsausgangsseitig aufgespreizt wird.

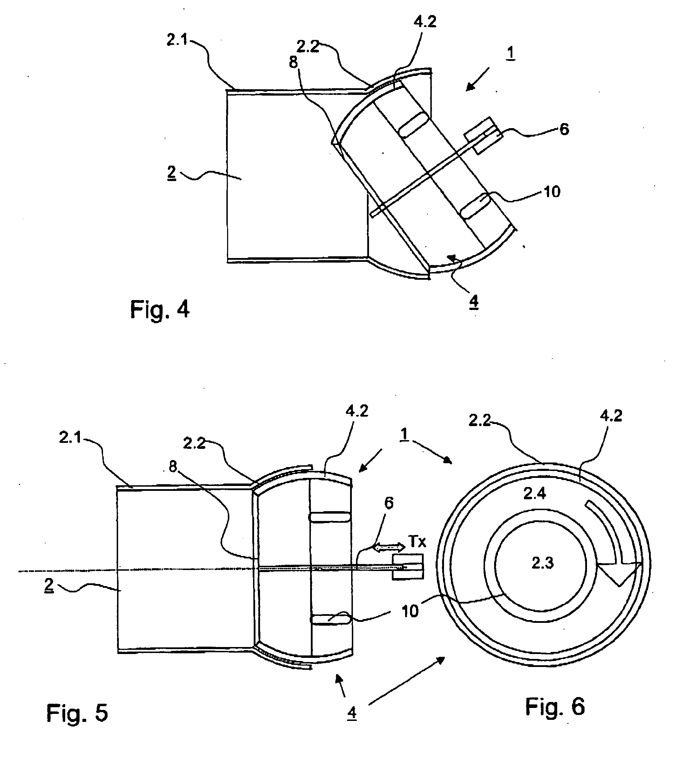

Figur 4 zeigt eine weitere Ausführungsform für einen Luftausströmer 1 mit einem als Schaufelkranz ausgebildeten Luftleitelement 4 und einem weiteren in Strömungsrichtung S gesehen nachgeschalteten Luftleitelement 10. Das Luftleitelement 10 ist, wie in den nachfolgenden Figuren 5 und 6 näher dargestellt, als ein kreisrundes Leitelement oder Lamelle ausgeführt. Das Luftleitelement 10 wird im Weiteren Lamelle 10 genannt. Je nach Ausführungsform können die Lamelle 10 und das Luftleitelement 4 und somit beide mittels des zentrischen Bedienelements 6 verstellbar sein. Im gezeigten Ausführungsbeispiel ist die Lamelle 10 starr für eine spotförmige Führung der Strömung ausgeführt und bildet einen inneren Luftführungskanal 2.3. Im äußeren Ringkanal oder Luftführungskanal 2.4 kann als Luftleitelement 4 der Schaufelkranz angeordnet sein. Zusätzlich kann in die kreisrunde Lamelle 10 eine nicht näher dargestellte Klappe angeordnet sein, die ein vollständiges Schließen bzw. Öffnen der kreisförmigen Strömungsöffnung der kreisrunden Lamelle 10 ermöglicht. Hierzu kann die Klappe in nicht näher dargestellter Art und Weise mit dem zentrisch angeordneten Bedienelement 6 verstellbar sein.

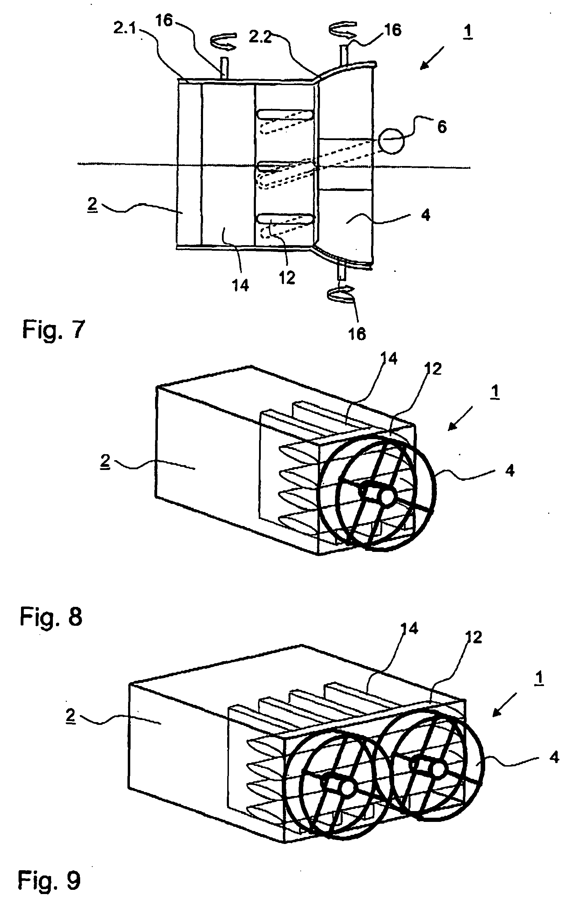

In den Figuren 7 und 8 ist eine weitere Ausführungsform für einen Luftausströmer 1 mit einem als Schaufelkranz ausgebildeten Luftleitelement 4 und weiteren in Strömungsrichtung S gesehen vorgeschalteten Luftleitelementen 12 und 14 dargestellt. Das vorgeschaltete Luftleitelement 12 kann eine konventionelle Form, z. B. eine Lamellenform, aufweisen. In Figur 7 sind als vorgeschaltete Luftleitelemente 12 und 14 mehrere Querlamellen bzw. Längslamellen angeordnet. Im Weiteren wird das vorgeschaltete Luftleitelement 12 als Querlamelle 12 und das Luftleitelement 14 als Längslamelle 14 bezeichnet. In Strömungsrichtung S gesehen sind den Längslamellen 14 die Querlamellen 12 nachgeschaltet, auf welchen das als Schaufelkranz ausgebildete Luftleitelement 4 aufgesetzt ist. Je nach Ausführungsform kann das zentrisch angeordnete Bedienelement 6 sowohl das Luftleitelement 4 als auch die Querlamellen 12 verstellen. Alternativ können weitere separate Verstellelemente 16 zur Verstellung der Längslamellen 14 und des Luftleitelements 4 vorgesehen sein.

Figur 9 zeigt eine weitere alternative Ausführungsform für einen Luftausströmer 1 mit einem aus zwei nebeneinander angeordneten Schaufelkränzen gebildeten Luftleitelement 4 und zwei in Strömungsrichtung S gesehen vorgeschalteten Luftleitelementen 12 und 14, die sich in Kanalquerrichtung über beide Schaufelkränze erstrecken.

Darüber hinaus sind weitere Kombinationen von verschiedenartigen Luftleitelementen 4 und 10, 12, 14 zur Einstellung verschiedener Strömungsarten und -richtungen möglich. Bevorzugt ist das als Schaufelkranz ausgebildete Luftleitelement 4 in Strömungsrichtung S gesehen als letztes Leitelement und somit strömungsausgangsseitig angeordnet. Der Luftführungskanal 2 kann unterteilt werden in einen inneren und äußeren Luftführungskanal. In einem solchen Ausführungsbeispiel ist zumindest der Schaufelkranz im äußeren Luftführungskanal angeordnet. Im inneren Luftführungskanal kann mindestens ein weiteres Luftleitelement angeordnet sein.

## Patentansprüche

1. Luftausströmer (1), insbesondere für einen Fahrzeuginnenraum, mit mindestens einem Luftführungskanal (2) und mindestens einem in diesem angeordneten Luftleitelement (4), das mittels eines einzelnen Bedienelements (6) in mehreren Rotationsfreiheitsgraden (Rx bis Rz) zur Einstellung von verschiedenen Strömungsrichtungen und in einem translatorischen Freiheitsgrad (Tx) zur Einstellung von verschiedenen Strömungsarten einstellbar ist, **dadurch gekennzeichnet, dass** das Luftleitelement (4) als ein Schaufelkranz mit einer Anzahl von Schaufeln (4.1) ausgebildet ist

2. Luftausströmer nach Anspruch 1, wobei durch translatorisches Verstellen des Bedienelements (6) entlang der Längsachse des Luftführungskanals (2) mittels des verstellten Luftleitelements (4) eine Drallströmung oder Turbulenzströmung einstellbar ist.

3. Luftausströmer nach Anspruch 1 oder 2, wobei durch translatorisches Verstellen des Bedienelements (6) entlang der Längsachse des Luftführungskanals (2) mittels des verstellten Luftleitelements (4) eine gerichtete Strömung einstellbar ist.

4. Luftausströmer (1) nach einem der vorhergehenden Ansprüche 1 bis 3, wobei das Bedienelement (6) zentrisch im Luftführungskanal (2) angeordnet ist.

5. Luftausströmer nach einem der vorhergehenden Ansprüche 1 bis 4, wobei die Schaufeln (4.1) zentriert um den Umfang einer inneren Ausnehmung des Luftleitelements (4) verteilt angeordnet sind.

6. Luftausströmer einem der vorhergehenden Ansprüche 1 bis 5, wobei die Schaufeln (4.1) zentriert um den Umfang des zentrisch angeordneten Bedienelements (6) verteilt angeordnet sind.

7. Luftausströmer nach Anspruch 6, wobei die Schaufeln (4.1) orthogonal und drehbar am Bedienelement (6) angeordnet sind und am radialen Ende (4.1.1) jeweils mit einem Zahnrad (4.3) versehen sind, das in eine im Gehäuse (4.2) des Luftleitelements (4) angeordnete Zahnradführung (4.4) geführt ist.

8. Luftausströmer (1) einem der vorhergehenden Ansprüche 1 bis 7, wobei die Schaufeln (4.1) mittels des Bedienelements (6) synchron verstellbar sind.

9. Luftausströmer nach einem der vorhergehenden Ansprüche 1 bis 8, wobei das Luftleitelement (4) im Wesentlichen kugelförmig ausgebildet ist und der Luftführungskanal (2) strömungsausgangsseitig eine Kugelpfanne bildet, in welche das Luftleitelement (4) in Art eines Kugelgelenks drehbar gelagert ist.

10. Luftausströmer nach einem der vorhergehenden Ansprüche 1 bis 9, wobei mehrere gleichartige oder verschiedenartige Luftleitelemente (4, 10, 12, 14) entlang der Längsachse des Luftführungskanals (2) hintereinander angeordnet sind.

11. Luftausströmer nach Anspruch 10, wobei die Luftleitelemente (4, 10, 12, 14) mittels des Bedienelements (6) gemeinsam und synchron verstellbar sind.

12. Luftausströmer nach Anspruch 10 oder 11, wobei weitere Verstellelemente (16) zum separaten Verstellen der verschiedenen Luftleitelemente (4, 10, 12, 14) vorgesehen sind.

13. Luftausströmer nach einem der vorhergehenden Ansprüche 10 bis 11, wobei mindestens eine der weiteren Luftleitelemente (10, 12, 14) als Lamelle oder kreisrundes Leitelement ausgebildet ist.

14. Luftausströmer (1) nach einem der vorhergehenden Ansprüche 1 bis 13, wobei das oder mehrere Luftleitelemente (4), insbesondere die Schaufeln (4.1) flexibel ausgebildet und verwindbar gelagert sind.

15. Luftausströmer (1) nach einem der vorhergehenden Ansprüche 1 bis 14, wobei die Luftleitelemente (4, 10, 12, 14) gekrümmt oder eben sind.

16. Luftausströmer (1) nach einem der vorhergehenden Ansprüche 1 bis 15, wobei der Luftführungskanal (2) als ein Ringrohr ausgebildet ist.

17. Luftausströmer (1) nach einem der vorhergehenden Ansprüche 1 bis 16, wobei der Luftführungskanal (2) als ein äußerer Ringkanal (2.3) einen weiteren, inneren Kanal (2.4) umgibt und parallel zu diesem verläuft.

18. Luftausströmer (1) nach einem der vorhergehenden Ansprüche 1 bis 17, wobei die Luftführungskanäle (2, 3) zylindrisch und koaxial ausgebildet sind.

## Claims

1. Air duct (1), especially for the interior of a vehicle, with at least one air guiding channel (2) and at least one air guiding element (4) arranged therein, which can be adjusted to multiple rotary degrees of freedom (Rx to Rz) for adjusting different flow directions by means of a single operating element (6) and to a tranlatory degree of freedom (Tx) for adjusting different flow types, **characterised in that** the air guiding element (4) is formed as a blade ring with a number of blades (4.1).

2. Air duct according to claim 1, wherein a vortex flow or a turbulence flow can be adjusted by means of translatory adjustment of the operating element (6) along the longitudinal axis of the air guiding channel (2) by means of the adjusted air guiding element (4).

3. Air duct according claim 1 or 2, wherein a directed flow can be adjusted by means of translatory adjustment of the operating element (6) along the longitudinal axis of the air guiding channel (2) by means of the adjusted air guiding element (4).

4. Air duct (1) according to one of the preceding claims 1 to 3, wherein the operating element (6) is arranged centrally in the air guiding channel (2).

5. Air duct according to one of the preceding claims 1 to 4, wherein the blades (4.1) are arranged in a centrally distributed manner around the circumference of an inner recess of the air guiding element (4).

6. Air duct according to one of the preceding claims 1 to 5, wherein the blades (4.1) are arranged centrally around the circumference of the centrally arranged operating element (6).

7. Air duct according to claim 6, wherein the blades (4.1) are arranged at the operating element (6) in an orthogonal and rotary manner and are respectively provided with a gear wheel (4.3) at the radial end (4.1.1), which is guided in a gear wheel guide (4.4) arranged in the housing (4.2) of the air guiding element (4).

8. Air duct (1) according to one of the preceding claims 1 to 7, wherein the blades (4.1) can be adjusted synchronously by means of the operating element (6).

9. Air duct according to one of the preceding claims 1 to 8, wherein the air guiding element (4) is essentially formed in a spherical manner, and the air guiding channel (2) forms a ball socket at the outlet side of the flow, in which the air guiding element is mounted in a rotary manner in the manner of a ball joint.

10. Air duct according to one of the preceding claims 1 to 9, wherein several similar or different air guiding elements (4, 10, 12, 14) are arranged consecutively along the longitudinal axis of the air guiding channel (2).

11. Air duct according to claim 10, wherein the air guiding elements (4, 10, 12, 14) can be adjusted jointly and synchronously by means of the operating element (6).

12. Air duct according to claim 10 or 11, wherein further adjusting elements (16) are provided for the separate adjustment of the different air guiding elements (4, 10, 12, 14).

13. Air duct according to one of the preceding claims 10 to 11, wherein at least one of the further air guiding elements (10, 12, 14) is formed as a fin or circular guiding element.

14. Air duct (1) according to one of the preceding claims 1 to 13, wherein the or several air guiding elements (4), especially the blades (4.1), are formed in a flexible manner and are stored in a deflectable manner.

15. Air duct (1) according to one of the preceding claims 1 to 14, wherein the air guiding elements (4, 10, 12, 14) are arcuate or planar.

16. Air duct (1) according to one of the preceding claims 1 to 15, wherein the air guiding channel (2) is formed as an annular tube.

17. Air duct (1) according to one of the preceding claims 1 to 16, wherein the air guiding channel (2) as an outer annular channel (2.3) surrounds a further inner channel (2.4) and is parallel thereto.

18. Air duct (1) according to one of the preceding claims 1 to 17, wherein the air guiding channels (2, 3) are formed in a cylindrical and coaxial manner.

## Revendications

1. Diffuseur d'air (1), en particulier pour un habitacle de véhicule, comprenant au moins un conduit de guidage d'air (2) et au moins un élément déflecteur d'air (4) disposé dans ce conduit de guidage d'air, élément déflecteur d'air qui, au moyen d'un élément de commande individuel (6), est réglable suivant plusieurs degrés de liberté de rotation (Rx à Rz), pour le réglage de différentes directions d'écoulement, et suivant un degré de liberté (Tx), en translation, pour le réglage de différents types d'écoulement,
**caractérisé en ce que** l'élément déflecteur d'air (4) est configuré comme une couronne à palettes comprenant un certain nombre de palettes (4.1).

2. Diffuseur d'air selon la revendication 1, où, par déplacement en translation de l'élément de commande (6), le long de l'axe longitudinal du conduit de guidage d'air (2), un écoulement tourbillonnaire ou un écoulement turbulent est réglable au moyen de l'élément déflecteur d'air déplacé (4).

3. Diffuseur d'air selon la revendication 1 ou 2, où, par déplacement en translation de l'élément de commande (6), le long de l'axe longitudinal du conduit de guidage d'air (2), un écoulement dirigé est réglable au moyen de l'élément déflecteur d'air déplacé (4).

4. Diffuseur d'air (1) selon l'une quelconque des revendications précédentes 1 à 3, où l'élément de commande (6) est disposé de façon centrale dans le conduit de guidage d'air (2).

5. Diffuseur d'air selon l'une quelconque des revendications précédentes 1 à 4, où les palettes (4.1) sont disposées en étant réparties, de façon centrée, autour de la circonférence d'un évidement intérieur de l'élément déflecteur d'air (4).

6. Diffuseur d'air selon l'une quelconque des revendications précédentes 1 à 5, où les palettes (4.1) sont disposées en étant réparties, de façon centrée, autour de la circonférence de l'élément de commande (6) disposé de façon centrale.

7. Diffuseur d'air selon la revendication 6, où les palettes (4.1) sont disposées sur l'élément de commande (6), de façon orthogonale et rotative, et sont dotées, au niveau de l'extrémité radiale (4.1.1), à chaque fois d'une roue dentée (4.3) qui est guidée dans un guidage de roue dentée (4.4) disposé dans le carter (4.2) de l'élément déflecteur d'air (4).

8. Diffuseur d'air (1) selon l'une quelconque des revendications précédentes 1 à 7, où les palettes (4.1) peuvent être déplacées de façon synchronisée, au moyen de l'élément de commande (6).

9. Diffuseur d'air selon l'une quelconque des revendications précédentes 1 à 8, où l'élément déflecteur d'air (4) est configuré sensiblement de façon sphérique, et le conduit de guidage d'air (2) forme, côté sortie de l'écoulement, un coussinet sphérique dans lequel l'élément déflecteur d'air (4) est logé en pouvant tourner à la façon d'une articulation sphérique.

10. Diffuseur d'air selon l'une quelconque des revendications précédentes 1 à 9, où plusieurs éléments déflecteurs d'air (4, 10, 12, 14) identiques ou différents sont disposés les uns derrière les autres, le long de l'axe longitudinal du conduit de guidage d'air (2).

11. Diffuseur d'air selon la revendication 10, où les éléments déflecteurs d'air (4, 10, 12, 14) peuvent être déplacés ensemble et de façon synchronisée, au moyen de l'élément de commande (6).

12. Diffuseur d'air selon la revendication 10 ou 11, où il est prévu d'autres éléments de déplacement (16) pour le déplacement distinct des différents éléments déflecteurs d'air (4, 10, 12, 14).

13. Diffuseur d'air selon l'une des revendications précédentes 10 et 11, où au moins l'un des autres éléments déflecteurs d'air (10, 12, 14) est configuré comme une lamelle ou un élément déflecteur de forme circulaire.

14. Diffuseur d'air (1) selon l'une quelconque des revendications précédentes 1 à 13, où l'élément ou plusieurs éléments déflecteurs d'air (4), en particulier les palettes (4.1), sont configurés de façon flexible et montés de façon déformable.

15. Diffuseur d'air (1) selon l'une quelconque des revendications précédentes 1 à 14, où les éléments déflecteurs d'air (4, 10, 12, 14) sont courbes ou plans.

16. Diffuseur d'air (1) selon l'une quelconque des revendications précédentes 1 à 15, où le conduit de guidage d'air (2) est configuré comme un tube annulaire.

17. Diffuseur d'air (1) selon l'une quelconque des revendications précédentes 1 à 16, où le conduit de guidage d'air (2), à la façon d'un conduit annulaire extérieur (2.3), entoure un autre conduit intérieur (2.4) et s'étend parallèlement à celui-ci.

18. Diffuseur d'air (1) selon l'une quelconque des revendications précédentes 1 à 17, où les conduits de guidage d'air (2, 3) sont configurés de façon cylindrique et coaxiale.
